# EUROPÄISCHE PATENTANMELDUNG

(11) **EP 1 162 713 A2**
(43) Veröffentlichungstag der Anmeldung: **12.12.2001**
(21) Anmeldenummer: 01112775.0
(22) Anmeldetag: 28.05.2001
(51) Int. Cl.: H02K 1/32

(54) **Turbogenerator mit einem Rotor mit direkter Gaskühlung**

(30) Priorität: 07.06.2000 DE 10027798
(71) Anmelder: ALSTOM Power N.V., 1101 CS Amsterdam (NL)
(72) Erfinder: Baer, Jürgen, 5506 Mägenwil (CH); Tommer, Josef, 5436 Würenlos (CH)
(74) Vertreter: Liebe, Rainer

(57) **Zusammenfassung**

Bei einem Turbogenerator (13) mit einem Rotor (10) mit direkter Gaskühlung, welcher Rotor (10) eine um einen zentralen Rotorkörper (18) herum angeordnete Rotorwicklung (14) aufweist, die stirnseitig jeweils durch eine ringförmige Kappenplatte (19) abgedeckt ist, und bei welchem Rotor (10) an den Stirnseiten kaltes Kühlgas zur Kühlung des Rotors (10) in Ringspaltsegmenten (33, 34) zwischen der Kappenplatte (19) und dem Rotorkörper (18) einströmt, wobei die Ringspaltsegmente (33, 34) in Umfangsrichtung gesehen seitlich jeweils durch den in den Ringspalt hineinragenden Abschnitt (16') einer zwischen der Kappenplatte (19) und der Rotorwicklung (14) angeordneten Enddistanzplatte (16) begrenzt werden, wird eine verbesserte Kühlung dadurch erreicht, dass Ablösungen der Kühlgasströmung beim Eintritt in die Ringspaltsegmente (33, 34) durch eine strömungsgünstige Ausgestaltung der an den Ringspalt angrenzenden Abschnitte (16') der Enddistanzplatten (16) vermieden werden.

## Beschreibung

### TECHNISCHES GEBIET

Die vorliegende Erfindung bezieht sich auf das Gebiet der Turbogeneratoren zur Erzeugung elektrischer Energie. Sie betrifft einen Turbogenerator gemäss dem Oberbegriff des Anspruchs 1.

### STAND DER TECHNIK

Ein solcher Turbogenerator ist z.B. aus der Druckschrift EP-A1-0 854 559 bekannt.

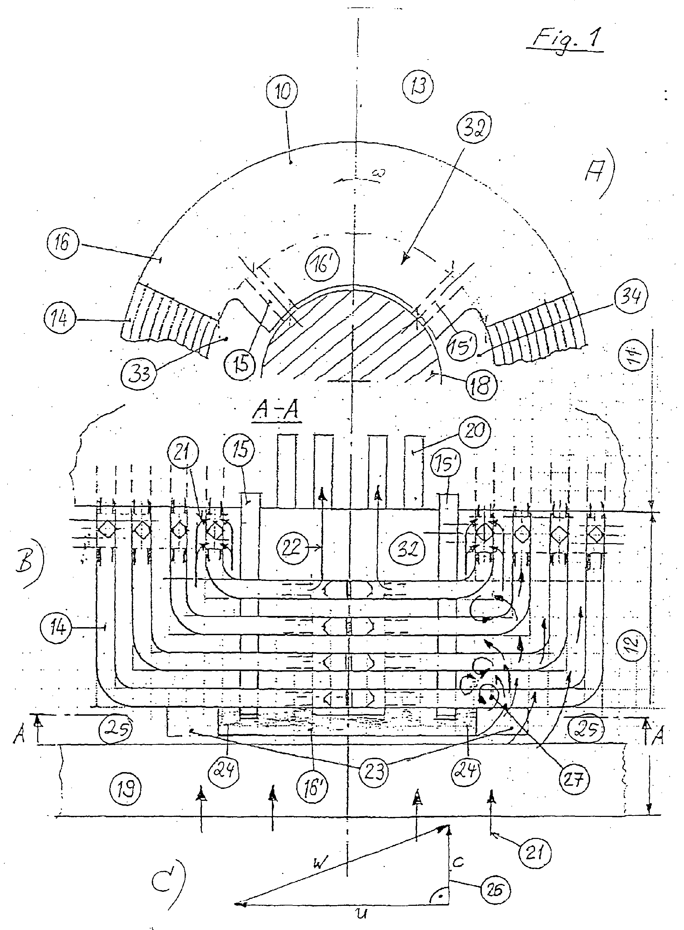

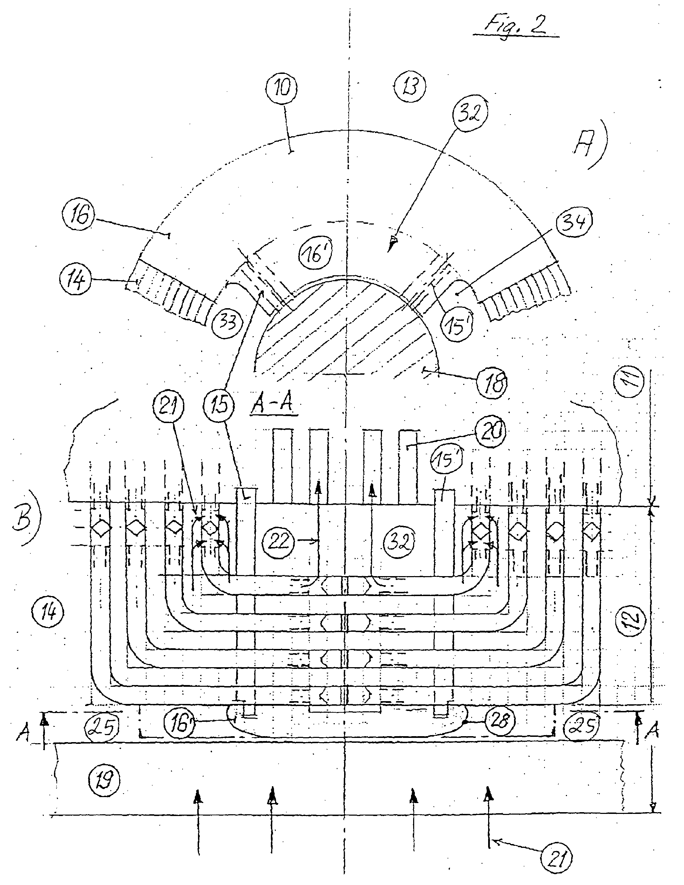

Zur Kühlung bzw. Abfuhr der elektrischen Wärmeverluste eines Rotors in einem Generator wird der Rotor von einem (meist gasförmigen) Kühlfluid durchströmt (siehe z.B. die EP-A1-0 854 559). Wichtig für eine gute Kühlung ist dabei unter anderem die Einströmgeometrie an den Stirnseiten des Rotors. Eine bekannte Einströmgeometrie ist in Fig. 1A und 1B wiedergegeben, wobei Fig. 1B eine Abwicklung der Rotor-Stirnseite zeigt, und Fig. 1A den Schnitt durch die (nicht abgewickelte) Rotor-Stirnseite in der Ebene A-A aus Fig. 1B. Der Rotor 10 eines Generators 13 umfasst einen zentralen, zylindrischen Rotorkörper 18, um den aussen herum eine oder mehrere Rotorwicklung(en) 14 angeordnet ist (sind). Die Rotorwicklung 14 verläuft im Rotor-Aktivteil 11 in mehreren Leiterbündeln parallel zur Rotorachse und macht im Rotor-Wickelkopf 12 zwischen zwei Leiterbündeln eine umkehrende Wendung um 180°. Der Wicklungsraum ist stirnseitig durch eine kreisringförmige Kappenplatte 19 abgeschlossen (22 in Fig. 2 der EP-A1-0 854 559). Zwischen der Kappenplatte 19 und der Rotorwicklung 14 sind Enddistanzplatten 16 angeordnet, welche die Form eines Kreisringsegmentes haben. Der in den Ringspalt zwischen der Rotorwicklung 14 und dem Rotorkörper 18 hineinragende Abschnitt der Enddistanzplatten 16 bildet zusammen mit jeweils zwei axialen Kammerwänden 15, 15' eine durchgehende Trennwand, die einen Kaltgasraum 25 und einen Warmgasraum 32 mit einem Gaseintritt 21 und einem Gasaustritt 22 (über entsprechende Ventilationsnuten 20) voneinander trennen. Die Enddistanzplatte 16 wird dabei zur Halterung der Kammerwände 15, 15' herangezogen. Dadurch ergibt sich meistens ein Ueberhang 24, der in den Kaltgasraum 25 hineinreicht. In ungünstigen Fällen hat dieser Ueberhang 24 sogar noch eine Verlängerung 23.

Der scharfkantige Abschluss des Ueberhangs 24 bzw. von dessen Verlängerung 23 zu dem angrenzenden Kaltgasraum 25 hin ist verantwortlich für eine starke mit Ablösungen der Strömung verbundene Kontraktion. Diese Strömungsablösungen (Wirbel 27) führen bei der Umfangsgeschwindigkeit des Rotors 10 zu einer ungleichmässigen Kühlmittelversorgung der Rotorwicklung(en) 14. Die resultierende Geschwindigkeit w der Kühlmittelströmung relativ zum Rotor 10 ergibt sich dabei gemäss dem Geschwindigkeitsdreieck 26 aus Fig. 1C aus der vektoriellen Ueberlagerung der axialen Strömungsgeschwindigkeit c und der Umfangsgeschwindigkeit u des Rotors 10.

Zur Vermeidung derartiger Ablösungen ist in der eingangs genannten EP-A1-0 854 559 bereits vorgeschlagen worden, im Einströmbereich des Kaltgases zwischen der Kappenplatte 19 und dem Rotorkörper 18 einen Gasleitring (GLR) in Form eines zweistufigen Strömungsgitters vorzusehen. Der GLR löst grundsätzlich das ventilationstechnische Problem, hat jedoch auch verschiedene Nachteile: Zum einen ist der zusätzliche Einbau eines derartigen GLR mit einem erheblichen Aufwand verbunden. Zum anderen ist seine Funktion gefährdet, sobald bedeutende Veränderungen am Kühlgasstrom vorgenommen werden (z.B. bei einem kürzeren Generator oder bei kleinerer Leistung). Schliesslich ist die Funktion des GLR drehrichtungsabhängig, so dass bei Umkehr der Drehrichtung der gewünschte Effekt nicht vorhanden ist.

### DARSTELLUNG DER ERFINDUNG

Es ist daher Aufgabe der Erfindung, die Rotorkühlung eines Generators der eingangs genannten Art so zu gestalten, dass ohne grossen zusätzlichen Aufwand die Versorgung des Rotors mit Kühlgas verbessert wird und insbesondere beim Eintritt des Kühlgases in den Rotor unerwünschte Verwirbelungen bzw. Wirbelablösungen im Kühlgasstrom weitgehend vermieden werden und der Strömungswiderstand herabgesetzt wird.

Die Aufgabe wird durch die Gesamtheit der Merkmale des Anspruchs 1 gelöst. Der Kern der Erfindung besteht darin, Ablösungen der Kühlgasströmung beim Eintritt in die Ringspaltsegmente durch eine strömungsgünstige Ausgestaltung der in den Ringspalt hineinragenden Abschnitte der Enddistanzplatten zu vermeiden.

Eine erste bevorzugte Ausgestaltung der Erfindung ist dadurch gekennzeichnet, dass die in die Kühlgasströmung hineinragenden in Umfangsrichtung gesehen seitlichen Kanten an den Abschnitten der Enddistanzplatten entweder eine Abschrägung bzw. Fase oder eine der Strömung angepasste Abrundung mit einem oder mehreren Rundungsradien aufweisen. Durch die Abschrägungen bzw. Abrundungen werden Ablösungen des einströmenden Kühlgases im Kantenbereich weitgehend vermieden und der Strömungswiderstand reduziert, wodurch die Rotorkühlung bei sonst gleichen Randbedingungen massgeblich verbessert wird. Weiterhin werden annähernd unbedeutende Wirbel durch die Beschleunigung des Kühlmediums von der Abrundung in den Segmentquerschnitt hinein aufgelöst. Besonders günstig ist es dabei, wenn die Enddistanzplatten mit den abgeschrägten bzw. abgerundeten Abschnitten einen seitlich durch zwei axiale, parallele Kammerwände begrenzten Warmgasraum stirnseitig abschliessen, und die abgeschrägten bzw. abgerundeten Abschnitte bündig mit den Kammerwänden abschliessen.

Eine zweite bevorzugte Ausgestaltung der Erfindung zeichnet sich dadurch aus, dass in Strömungsrichtung vor den Abschnitten der Enddistanzplatten jeweils ein zusätzliches Gasführungssegment angeordnet ist, welches die Kühlgasströmung um den Abschnitt herumlenkt. Unabhängig von der Abrundung der Kanten der Abschnitte kann die Umströmung dieser Abschnitte durch die vorgelagerten Gasführungssegmente weiter vergleichmässigt und verbessert werden, wobei sich durch die separaten Gasführungssegmente zusätzliche Gestaltungs- und Optimierungsmöglichkeiten eröffnen.

Weiter verbessert wird die Unterdrückung von sich ablösenden Wirbeln, wenn das Gasführungssegment gemäss einer bevorzugten Weiterbildung durch einen Spalt getrennt vor dem Abschnitt angeordnet ist und zur Kühlgasströmung hin eine konvex gekrümmte Aussenseite aufweist, und der Abschnitt der Enddistanzplatte und das vorgelagerte Gasführungssegment so ausgebildet sind, dass entgegen der Drehrichtung des Rotors Kühlgas von der auflaufenden Seite her in den Spalt gedrückt wird. Das durch den Spalt strömende Kühlgas verhindert bei seinem Austritt zusätzlich die Wirbelbildung. Um störende Einflüsse der Spaltströmung zu vermeiden ist es dabei vorteilhaft, wenn das Gasführungssegment an der in Drehrichtung des Rotors hinteren Kante so ausgebildet ist, dass der durch den Spalt strömende Kühlgasstrom weitgehend übergangslos dem in das angrenzende Ringspaltsegment einströmenden Kühlgasstrom zugefügt wird.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1A-C: die bekannte Kühlanordnung für den Rotor eines gasgekühlten Generators mit der dabei auftretenden Wirbelbildung - durch welche eine ungleichförmige Kühlstrombeaufschlagung der Rotorkupfer-Hohlleiterwicklung luv- und leeseitig hervorgerufen wird - in einer Abwicklung der Rotor-Stirnseite (Fig. 1B), und einen Schnitt durch die (nicht abgewickelte) Rotor-Stirnseite in der Ebene A-A aus Fig. 1B (Fig. 1A), sowie das dabei wesentliche Geschwindigkeitsdreieck für die Kühlgasströmung (Fig. 1C);
- Fig. 2A, B: ein erstes bevorzugtes Ausführungsbeispiel der erfindungsgemässen Kühlgas-Stromführung in einer zu Fig. 1A und 1B vergleichbaren Darstellung mit an den Kanten abgerundeter Enddistanzplatte, die mit den Kammerwänden des Warmgasraumes bündig verläuft oder etwas in den Kaltgasraum hineinragen kann;
- Fig. 3A, B: ein zweites bevorzugtes Ausführungsbeispiel der erfindungsgemässen Kühlgas-Stromführung in einer zu Fig. 1A und 1B vergleichbaren Darstellung mit an den Kanten abgerundeter Enddistanzplatte und einem vorgelagerten Gasführungssegment;
- Fig. 4A, B: ein drittes bevorzugtes Ausführungsbeispiel der erfindungsgemässen Kühlgas-Stromführung in einer zu Fig. 1A und 1B vergleichbaren Darstellung mit an den Kanten abgerundeter Enddistanzplatte und einem vorgelagerten Gasführungssegment vergrösserter Breite;
- Fig. 5A, B: ein viertes bevorzugtes Ausführungsbeispiel der erfindungsgemässen Kühlgas-Stromführung in einer zu Fig. 1A und 1B vergleichbaren Darstellung mit an den Kanten abgerundeter Enddistanzplatte und einem vorgelagerten Gasführungssegment mit strömungsgünstiger Nase am Spaltauslass; und
- Fig. 6A, B: ein fünftes bevorzugtes Ausführungsbeispiel der erfindungsgemässen Kühlgas-Stromführung in einer zu Fig. 1A und 1B vergleichbaren Darstellung mit an den Kanten abgerundeter Enddistanzplatte mit vergrösserter Dicke.

### WEGE ZUR AUSFÜHRUNG DER ERFINDUNG

In den meisten Fällen der ausgeführten Turbogenerator-Rotoren werden keine Gasleitringe GLR benötigt, um zusätzlichen Druck für die Rotorkühlung zu erzielen. Eine verbesserte Materialausnutzung sowie verbesserte Laufeigenschaften (Vermeidung thermischer Unwucht) werden erreicht, wenn die Konstruktion am Rotoreintritt verändert wird, um die Verwirbelungen (Wirbel 27 in Fig. 1B) beim Eintritt des Kühlmediums weitestgehend zu vermeiden. Der Erfindungsgedanke besteht also in einer Verbesserung der Kühlgasversorgung (Kühlstromverteilung und -volumen durch reduzierten Strömungs-Rotoreintrittswiderstand) aller Turbogeneratoren und im besonderen Fall in der Substitution des GLR durch eine Vermeidung der Eintritts-Strömungsablösungen.

In Fig. 2 ist ein erstes bevorzugtes Ausführungsbeispiel der erfindungsgemässen Kühlgas-Stromführung in einer zu Fig. 1A und 1B vergleichbaren Darstellung wiedergegeben. Der in den Ringspalt hineinragende Abschnitt 16' der Enddistanzplatte 16 ist hier nicht nur mit einem gegenüber Fig. 1 verkürzten Ueberhang über die Kammerwände 15, 15' versehen (oder schliesst sogar bündig mit den Kammerwänden 15, 15' ab), sondern er weist vor allem Abrundungen 28 (oder Abschrägungen bzw. Fasen) an den seitlichen Kanten des Abschnitts 16' auf. Durch die Verkürzung (bzw. das bündige Abschliessen) und die Abrundungen 28, die in ihrem Rundungsradius an die eintretende Kühlgasströmung angepasst sind, werden Wirbelbildungen weitestgehend ausgeschlossen und es wird der Eintrittswiderstandsbeiwert deutlich reduziert.

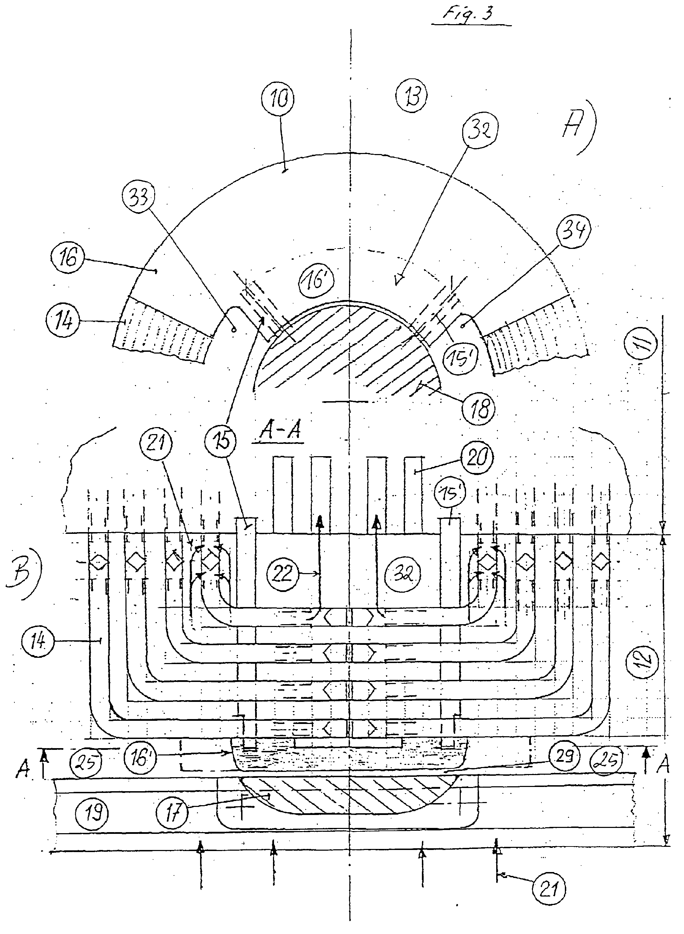

Ein zweites Ausführungsbeispiel der Erfindung ist in Fig. 3 dargestellt. Dem an den Kanten abgerundeten Abschnitt 16' der Enddistanzplatte 16 ist hier ein zusätzliches Gasführungssegment 17 vorgesetzt. Gasführungssegment 17 und Enddistanzplatte 16 sind durch einen Spalt 29 voneinander getrennt. Das Gasführungssegment 17, das zur Kühlgasströmung hin eine konvex gekrümmte Aussenseite aufweist, lenkt die Kühlgasströmung strömungsgünstig um den Abschnitt 16' herum.

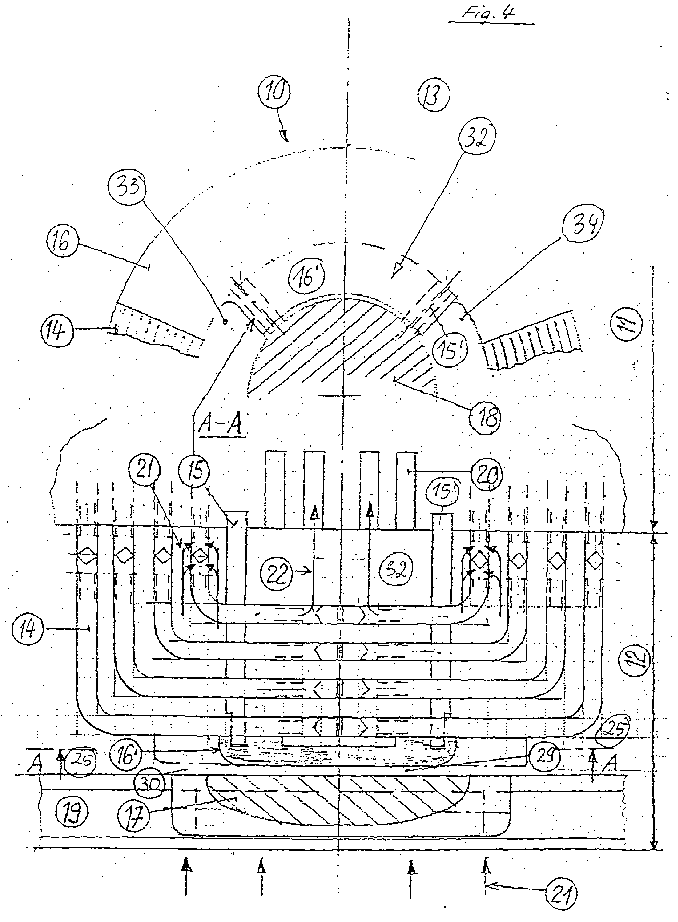

Bei einem dritten Ausführungsbeispiel gemäss Fig. 4 ist das Gasführungssegment 17 in Umfangsrichtung gegenüber dem Abschnitt 16' verlängert. Der Spalt 29 kann so strömungstechnisch dahingehend benutzt werden, dass von der auflaufenden Seite 30 her aufgrund des erhöhten Staudruckes etwas Kühlmedium durch den Spalt gedrückt wird, um die eventuell noch vorhandenen Wirbel aufzufüllen bzw. aufzulösen.

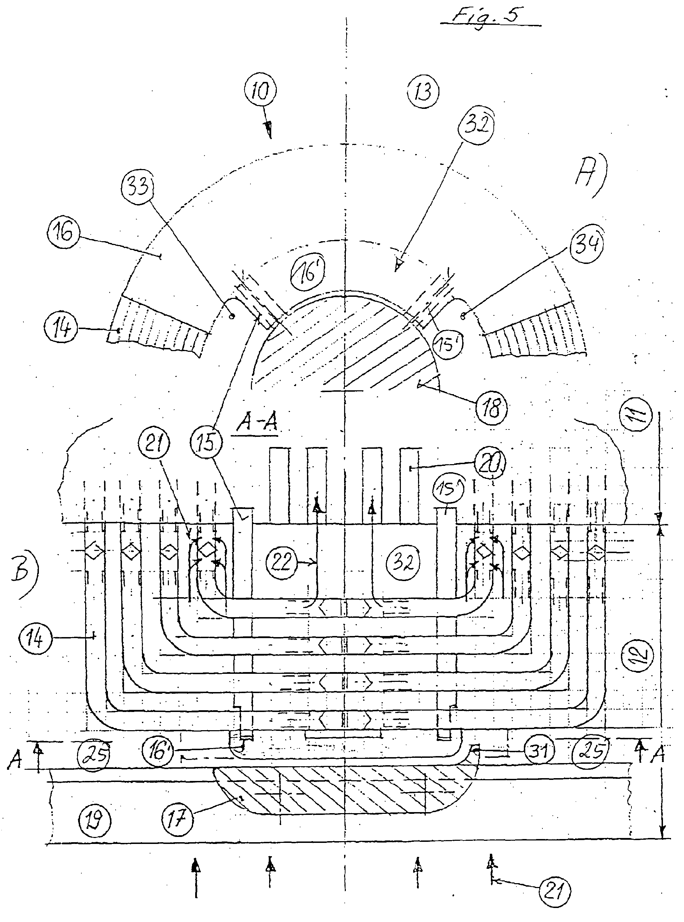

Ein weiteres Ausführungsbeispiel ist in Fig. 5 dargestellt. Hier ist das an der Kappenplatte 19 befestigte Gasführungssegment 17 strömungstechnisch noch weiter verbessert, indem es an der Ausgangsseite des Spaltes 29 mit einer einwärts gekrümmten Nase 31 versehen ist. Auf diese Weise kann das aus dem Spalt 29 austretende Kühlgas besser (strömungsgünstiger) in den Kühlstrom des Rotors 10 zurückgeführt werden.

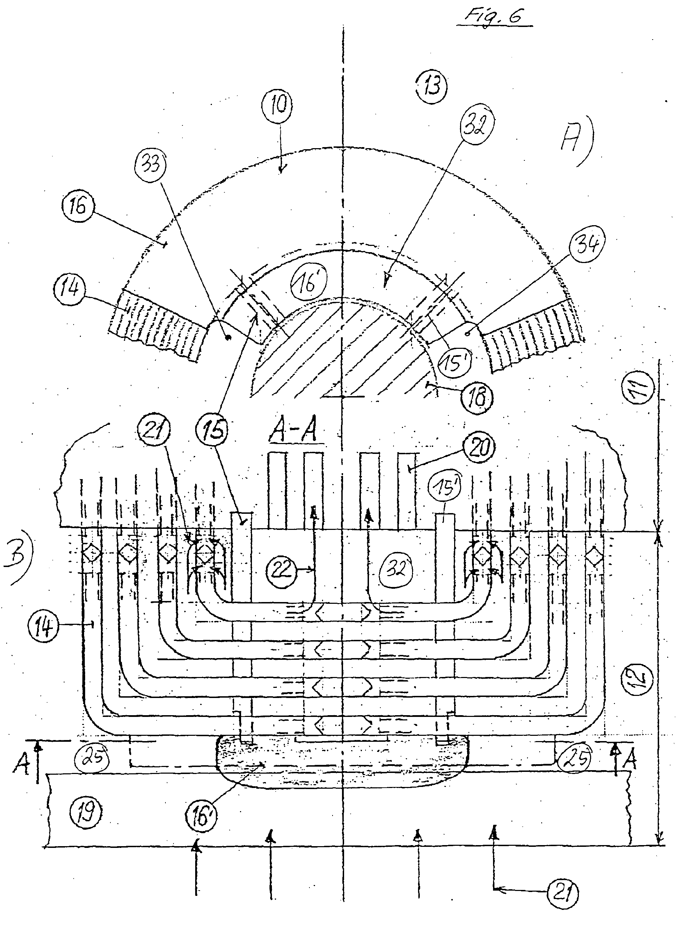

Ein anderes Ausführungsbeispiel gemäss Fig. 6 verzichtet auf das zusätzliche Gasführungssegment 17. In diesem Fall weist der in den Ringspalt hineinragenden Abschnitt 16' der Enddistanzplatte 16 eine grössere Dicke auf als der übrige Teil der Enddistanzplatte 16 und ragt mit seiner dem Kühlgasstrom zugewandten Seite unter die Kappenplatte 19 hinein. Auf diese Weise kann ein grösserer Rundungsradius an den Kanten des Abschnittes 16' verwirklicht werden, was der Strömung im Eintritt zugute kommt.

Insgesamt ergibt sich mit der Erfindung eine einfache und materialsparende Verbesserung und Vergleichmässigung der Rotorkühlung, die - abgesehen von dem Ausführungsbeispiel der Fig. 5 - für beide Drehrichtungen des Rotors 10 unverändert eingesetzt werden kann.

### BEZUGSZEICHENLISTE

- 10: Rotor
- 11: Rotor-Aktivteil
- 12: Rotor-Wickelkopf
- 13: Turbogenerator
- 14: Rotorwicklung
- 15,15': Kammerwand
- 16: Enddistanzplatte
- 16': Abschnitt (Enddistanzplatte)
- 17: Gasführungssegment
- 18: Rotorkörper
- 19: Kappenplatte
- 20: Ventilationsnut
- 21: Gaseintritt
- 22: Gasaustritt
- 23: Verlängerung (Ueberhang)
- 24: Ueberhang (Enddistanzplatte)
- 25: Kaltgasraum
- 26: Geschwindigkeitsdreieck
- 27: Wirbel
- 28: Abrundung
- 29: Spalt
- 30: auflaufende Seite
- 31: Nase
- 32: Warmgasraum
- 33,34: Ringspaltsegment

## Patentansprüche

1. Turbogenerator (13) mit einem Rotor (10) mit direkter Gaskühlung, welcher Rotor (10) eine um einen zentralen Rotorkörper (18) herum angeordnete Rotorwicklung (14) aufweist, die stirnseitig jeweils durch eine ringförmige Kappenplatte (19) abgedeckt ist, und bei welchem Rotor (10) an den Stirnseiten kaltes Kühlgas zur Kühlung des Rotors (10) in Ringspaltsegmenten (33, 34) zwischen der Kappenplatte (19) und dem Rotorkörper (18) einströmt, wobei die Ringspaltsegmente (33, 34) in Umfangsrichtung gesehen seitlich jeweils durch den in den Ringspalt hineinragenden Abschnitt (16') einer zwischen der Kappenplatte (19) und der Rotorwicklung (14) angeordneten Enddistanzplatte (16) begrenzt werden, **dadurch gekennzeichnet, dass** Ablösungen der Kühlgasströmung beim Eintritt in die Ringspaltsegmente (33, 34) durch eine strömungsgünstige Ausgestaltung der an den Ringspalt angrenzenden Abschnitte (16') der Enddistanzplatten (16) vermieden werden.

2. Turbogenerator nach Anspruch 1, **dadurch gekennzeichnet, dass** die in die Kühlgasströmung hineinragenden, in Umfangsrichtung gesehen seitlichen Kanten an den Abschnitten (16') der Enddistanzplatten (16) eine Abschrägung bzw. Fase aufweisen.

3. Turbogenerator nach Anspruch 1, **dadurch gekennzeichnet, dass** die in die Kühlgasströmung hineinragenden, in Umfangsrichtung gesehen seitlichen Kanten an den Abschnitten (16') der Enddistanzplatten (16) eine der Strömung angepasste Abrundung (28) mit einem oder mehreren Rundungsradien aufweisen.

4. Turbogenerator nach einem der Ansprüche 2 und 3, **dadurch gekennzeichnet, dass** die Enddistanzplatten (16) mit den abgeschrägten bzw. abgerundeten Abschnitten (16') einen seitlich durch zwei axiale, parallele Kammerwände (15, 15') begrenzten Warmgasraum (32) stirnseitig abschliessen, und dass die abgeschrägten bzw. abgerundeten Abschnitte (16') bündig mit den Kammerwänden (15, 15') abschliessen.

5. Turbogenerator nach Anspruch einem der Ansprüche 2 bis 4, **dadurch gekennzeichnet, dass** in Strömungsrichtung vor den Abschnitten (16') der Enddistanzplatten (16) jeweils ein zusätzliches Gasführungssegment (17) angeordnet ist, welches die Kühlgasströmung um den Abschnitt (16') herumlenkt.

6. Turbogenerator nach Anspruch 5, **dadurch gekennzeichnet, dass** das Gasführungssegment (17) durch einen Spalt (29) getrennt vor dem Abschnitt (16') angeordnet ist und zur Kühlgasströmung hin eine konvex gekrümmte Aussenseite aufweist.

7. Turbogenerator nach Anspruch 6, **dadurch gekennzeichnet, dass** das Gasführungssegment (17) in Umfangsrichtung im wesentlichen dieselbe Länge aufweist wie der Abschnitt (16') der Enddistanzplatte (16) und mit dem Abschnitt (16') strömungstechnisch eine Einheit bildet.

8. Turbogenerator nach Anspruch 6, **dadurch gekennzeichnet, dass** der Abschnitt (16') der Enddistanzplatte (16) und das vorgelagerte Gasführungssegment (17) so ausgebildet sind, dass entgegen der Drehrichtung des Rotors (10) Kühlgas von der auflaufenden Seite (30) her in den Spalt (29) gedrückt wird.

9. Turbogenerator nach Anspruch 8, **dadurch gekennzeichnet, dass** das Gasführungssegment (17) in Drehrichtung des Rotors (10) zumindest mit der vorderen Kante über den Abschnitt (16') der Enddistanzplatte (16) übersteht.

10. Turbogenerator nach einem der Ansprüche 8 und 9, **dadurch gekennzeichnet, dass** das Gasführungssegment (17) an der in Drehrichtung des Rotors (10) hinteren Kante so ausgebildet ist, dass der durch den Spalt (29) strömende Kühlgasstrom weitgehend übergangslos dem in das angrenzende Ringspaltsegment (34) einströmenden Kühlgasstrom zugefügt wird.

11. Turbogenerator nach Anspruch 10, **dadurch gekennzeichnet, dass** das Gasführungssegment (17) an der in Drehrichtung des Rotors (10) hinteren Kante eine nach innen gekrümmte Nase (31) aufweist.

12. Turbogenerator nach einem der Ansprüche 5 bis 11, **dadurch gekennzeichnet, dass** das Gasführungssegment (17) an der Kappenplatte (19) befestigt ist.

13. Turbogenerator nach einem der Ansprüche 2 bis 4, **dadurch gekennzeichnet, dass** der in den Ringspalt hineinragende Abschnitt (16') der Enddistanzplatte (16) eine grössere Dicke aufweist als der übrige Teil der Enddistanzplatte (16) und mit seiner dem Kühlgasstrom zugewandten Seite unter die Kappenplatte (19) hineinragt.
